Europäisches Patentamt

(19) European Patent Office

Office européen des brevets

(11) Numéro de publication : **0 305 244 B1**

(12) **FASCICULE DE BREVET EUROPEEN**

(45) Date de publication du fascicule du brevet :
29.05.91 Bulletin 91/22

(51) Int. Cl.⁵ : **G01D 5/26**

(21) Numéro de dépôt : 88401962.1

(22) Date de dépôt : 28.07.88

(54) **Procédé et dispositif de mesure par l'analyse d'un spectre lumineux cannelé, notamment de mesure d'un déplacement de faible amplitude d'une surface mobile, éventuellement représentatif de la variation d'une grandeur physique convertible en un tel deplacement.**

(30) Priorité : 31.07.87 FR 8710929

(43) Date de publication de la demande :
01.03.89 Bulletin 89/09

(45) Mention de la délivrance du brevet :
29.05.91 Bulletin 91/22

(84) Etats contractants désignés :
BE DE GB IT SE

(56) Documents cités :
EP-A- 0 013 974
DE-A- 3 443 399
PATENT ABSTRACTS OF JAPAN, vol. 10, no.
254 (P-492) [2310], 30 août 1986, page 154 P
492; & JP-A-61 82 113 (SATORU TOYOOKA)
25.04.1986

(73) Titulaire : PHOTONETICS
52 Avenue de l'Europe
F-78160 Marly le Roi (FR)

(72) Inventeur : Graindorge, Philippe
2, Square des Genets
F-78470 Magny-les-Hameaux (FR)
Inventeur : Desforges, François-Xavier
17, rue de l'Hermitage
F-78000 Versailles (FR)

(74) Mandataire : Lecca, Jean et al
CABINET PLASSERAUD 84, rue d'Amsterdam
F-75009 Paris (FR)

## Description

La présente invention concerne l'analyse des spectres lumineux cannelés, c'est-à-dire des spectres résultant de la modulation d'une lumière de largeur spectrale relativement étendue, en particulier de lumière blanche, par une forme d'onde périodique, ou pour le moins quasi-périodique, en mettant en oeuvre notamment un interféromètre à division d'amplitude, appelé également interféromètre à deux ondes ou deux faisceaux, tel qu'un interféromètre de Fizeau ou de Michelson.

On sait qu'un interféromètre de Fizeau par exemple comporte deux surfaces réfléchissantes produisant un système d'interférences, à savoir une surface fixe et une surface mobile, et qu'il produit, lorsqu'il est éclairé en lumière blanche, ou de largeur spectrale étendue, un spectre cannelé représentatif de la distance variable entre les deux surfaces et donc de la position de la surface mobile, d'où possibilité de mesurer le déplacement de celle-ci en analysant le spectre cannelé produit par l'interféromètre.

On sait par ailleurs convertir en déplacement d'une surface mobile d'autres grandeurs physiques, telles que pression (la conversion étant effectuée au moyen d'une membrane élastique déformable dont une face est soumise à la pression à mesurer), une température (par détermination de la dilatation qu'elle produit), d'une force (par détermination de l'extrémité d'un ressort soumis à cette force), d'un champ électrique (agissant sur un élément piézoélectrique qui se déforme) ou d'un champ magnétique (agissant sur un élément magnétostrictif).

L'analyse d'un spectre cannelé permet donc de mesurer un déplacement ou plus généralement une grandeur physique convertible en déplacement. Elle permet également de mesurer une longueur d'onde lorsque l'interféromètre est éclairé en une lumière monochromatique (dont on veut mesurer la longueur d'onde) ou un indice de réfraction lorsque l'intervalle entre la surface fixe et la surface mobile est rempli par une substance (dont on veut mesurer l'indice) étant donné que le spectre cannelé est fonction de la longueur d'onde et de l'indice.

On a déjà proposé d'effectuer l'analyse d'un tel spectre cannelé en utilisant un second interféromètre identique au premier interféromètre produisant le spectre cannelé et en profitant du fait que l'intensité lumineuse à la sortie du second interféromètre est maximale lorsque la différence de marche des rayons lumineux dans celui-ci est identique à la différence de marche des rayons lumineux dans le premier interféromètre.

Ainsi, dans une communication de MM. Thomas BOSSELMAN, Rheinhardt ULRICH et Hervé ARDITI publiée dans les Actes de la conférence sur les capteurs à fibre optique intitulée "OPTO 85" (21-23 Mai 1985 à Paris), on met en oeuvre deux interferomètres de Michelson, connectés par des fibres optiques multimodes en reconstruisant dans le second interféromètre, au moyen d'une surface réfléchissante mobile, la position de la surface réfléchissante mobile (dont on veut déterminer le déplacement) du premier interféromètre éclairé en lumière blanche, la détection de la position de la surface mobile du second interféromètre étant réalisée au moyen d'une photodiode qui reçoit l'intensité lumineuse sortant du second interféromètre.

Un tel dispositif à deux interféromètres exige, d'une part, la mise en oeuvre de deux interféromètres absolument identiques et, d'autre part, un asservissement très précis pour réaliser l'identité de différence de marche des rayons lumineux dans les deux interféromètres, mettant en particulier en oeuvre un enregistreur de fréquences transitoires spécial synchronisé pour les franges d'interférences et un microprocesseur, ainsi qu'un laser hélium-néon stabilisé pour établir une fréquence de référence.

La présente invention vise à perfectionner l'analyse du spectre cannelé produit par un interféromètre, en simplifiant celle-ci, notamment en n'utilisant pas de second interféromètre.

A cet effet on analyse le spectre cannelé produit par un interféromètre à deux faisceaux, tel qu'un interféromètre de Fizeau, en étalant spatialement le spectre cannelé modulé en fréquence, en filtrant le spectre étalé spatialement avec un coefficient de filtrage qui varie périodiquement avec une période fixe, qui est égale ou sensiblement égale, éventuellement à un facteur constant près, à la période spatiale du spectre étalé spatialement, pour une position de référence de la surface mobile de l'interféromètre.

La présente invention a donc pour objet
– d'une part, un procédé de mesure par analyse d'un spectre lumineux cannelé, notamment de mesure d'un déplacement de faible amplitude d'une surface mobile, éventuellement représentative de la variation d'une grandeur physique convertible en un tel déplacement, consistant à engendrer un spectre cannelé dont la fréquence de modulation spectrale est fonction du déplacement d'une surface mobile par rapport à une position de référence de celle-ci et à analyser ledit spectre cannelé, caractérisé en ce que l'analyse du spectre cannelé est réalisée en étalant spatialement le spectre cannelé modulé en fréquence, en filtrant le spectre étalé spatialement avec un coefficient de filtrage qui varie périodiquement avec une période fixe, qui est égale ou sensiblement égale, éventuellement à un facteur constant près, à la période spatiale du spectre étalé spatialement, pour une position de référence de ladite surface mobile, et en déduisant de ce spectre filtré la phase de modulation et éventuellement l'intensité moyenne du spectre cannelé ;
– d'autre part, un dispositif de mesure mettant en oeuvre ce procédé qui comporte un interféromètre à deux faisceaux avec deux surfaces réfléchissantes, dont une surface est fixe et l'autre est mobile, l'intervalle variable entre ces deux surfaces déterminant la différence de marche des rayons lumineux dans l'interféromètre, une source de lumière éclairant ledit interféromètre et un analyseur du spectre cannelé engendré par ladite source de lumière dans ledit interféromètre, caractérisé en ce que l'analyseur est constitué par des moyens d'étalement spatial du spectre cannelé modulé en fréquence, par un filtre dont le coefficient de transmission et/ou de réflexion est périodique, au moins suivant une direction, de période fixe, égale ou sensiblement égale, éventuellement à un facteur près, à la période de la distribution spatiale du spectre étalé spatialement, et au moins un photodétecteur recevant la lumière transmise et/ou réfléchie par ledit réseau pour déterminer la phase de modulation du spectre cannelé et donc ladite différence de marche qui est fonction du déplacement de ladite surface mobile.

Avantageusement

– on prévoit deux photodétecteurs mesurant la lumière transmise et/ou réfléchie et on traite les sorties des deux photodétecteurs pour déterminer non seulement la phase, mais également l'intensité moyenne, du spectre cannelé ;

– l'interféromètre est un interféromètre de Fizeau ;

– les moyens d'étalement spatial sont constitués par un réseau de diffraction ;

– la source de lumière est une source de lumière blanche, telle qu'une lampe à filament de tungstène, ou une diode électroluminescente (LED) ;

– on prévoit des fibres optiques, en particulier des fibres optiques multimodes, entre la source de lumière et l'entrée de l'interféromètre, d'une part, et la sortie de l'interféromètre et l'analyseur, d'autre part, ce qui permet de mesurer des déplacements, de faible amplitude, même dans des endroits difficilement accessibles et sans craindre les perturbations électromagnétiques.

L'invention pourra, de toute façon, être bien comprise à l'aide du complément de description qui suit, ainsi que des dessins ci-annexés, lesquels complément et dessins sont, bien entendu, donnés surtout à titre d'indication.

La figure 1 est une vue schématique illustrant un mode de réalisation d'un dispositif selon l'invention, mettant en oeuvre le procédé selon l'invention.

La figure 2 montre une partie d'un spectre cannelé obtenu en sortie de l'interféromètre du dispositif de la figure 1.

La figure 3 est un schéma explicatif montrant l'étalement spatial du spectre cannelé obtenu en sortie de l'interféromètre du dispositif selon la figure 1, grâce au réseau de diffraction du dispositif.

La figure 4 illustre par des courbes de haut en bas :

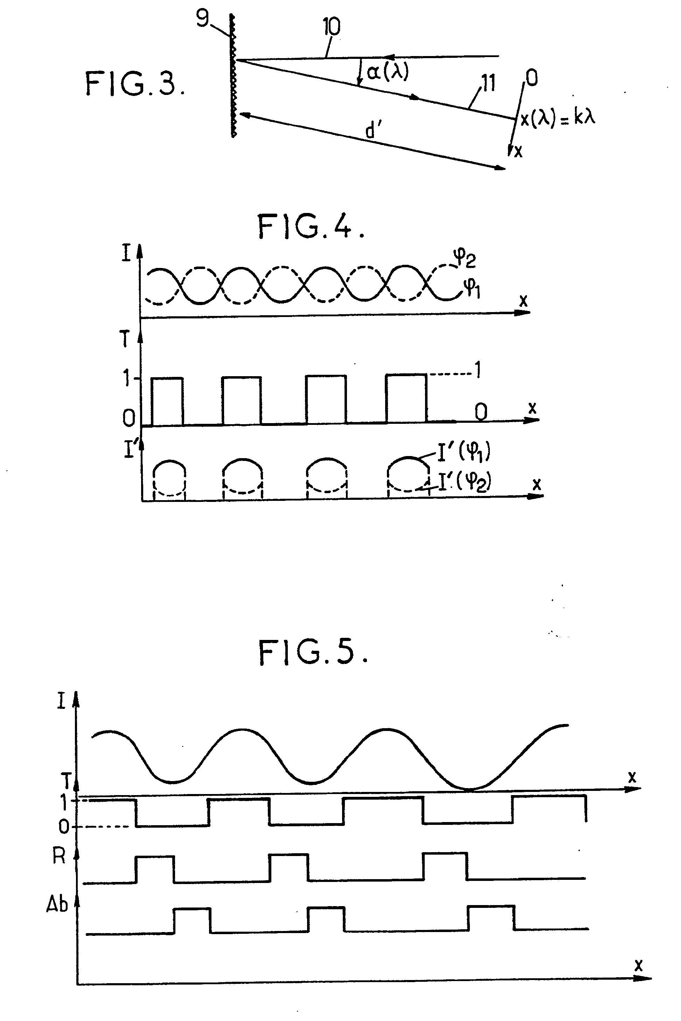

– la répartition spatiale de l'intensité de la lumière produite par le réseau de la figure 3,

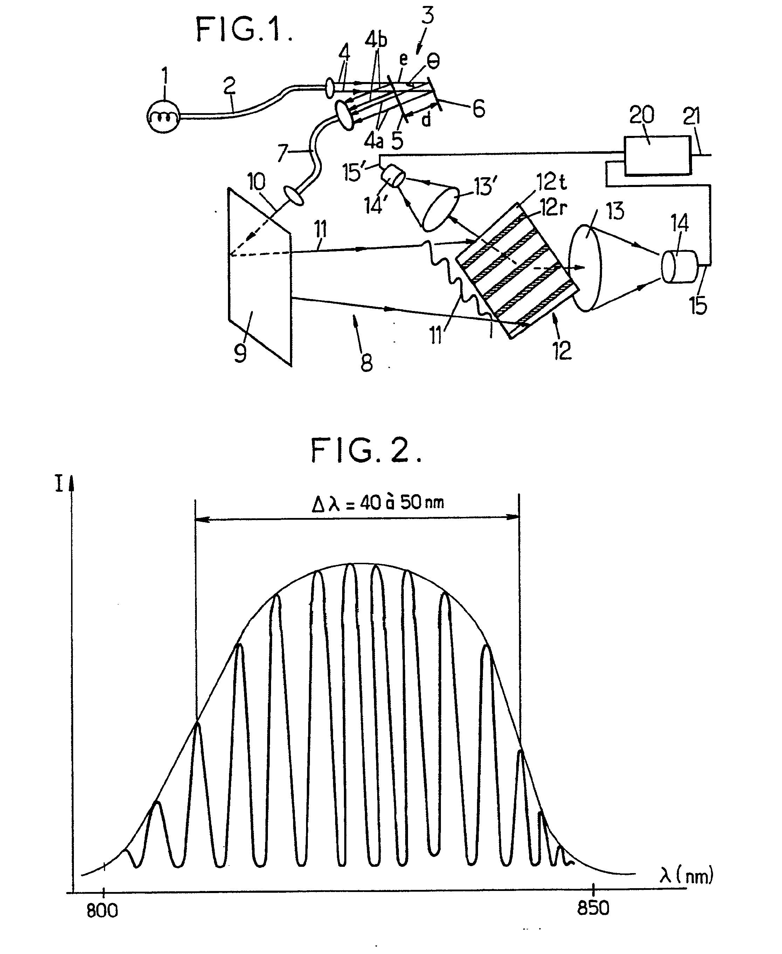

– le coefficient de transmission du filtre que comporte le dispositif de la figure 1,

– l'intensité transmise par le filtre à partir de la répartition spatiale précitée.

La figure 5 montre, par des courbes successives de haut en bas :

– la répartition spatiale de l'intensité à l'entrée du filtre :

– la transmission d'un autre type de filtre,

– la réflexion produite par ce filtre,

– l'absorption produite par ce filtre.

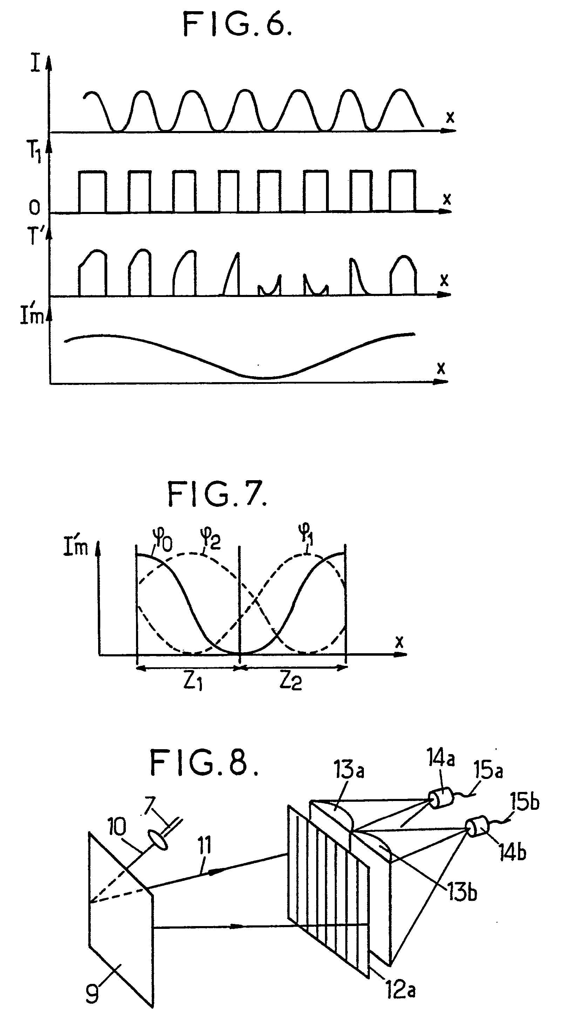

La figure 6 est analogue à la figure 4, mais dans le cas où la période du filtre est légèrement différente de celle du faisceau lumineux incident étalé spatialement, et illustre de haut en bas les variations spatiales de l'intensité incidente, du coefficient de transmission du filtre, de l'intensité lumineuse transmise par le filtre et enfin de l'intensité lumineuse moyenne transmise par le filtre.

La figure 7 illustre les variations de la phase de l'intensité moyenne transmise par le même filtre.

La figure 8 représente une variante de l'analyseur de la figure 1, mettant en oeuvre un filtre qui correspond aux figures 6 et 7.

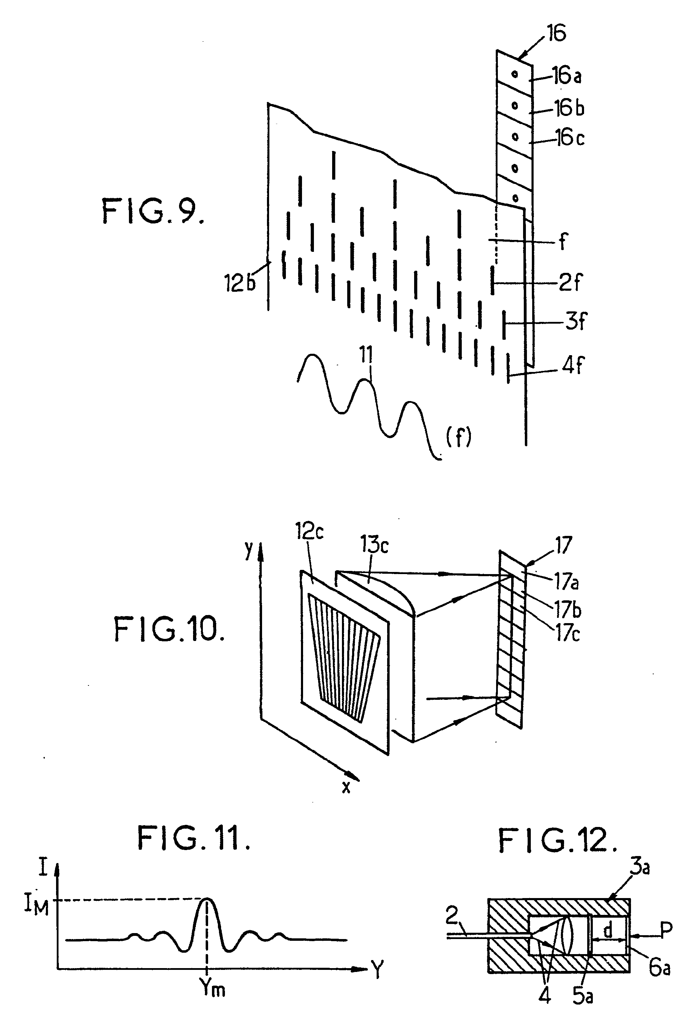

La figure 9 illustre partiellement une deuxième variante de l'analyseur de la figure 1.

La figure 10 illustre une troisième variante de l'analyseur de la figure 1.

La figure 11 représente la sortie du filtre de l'analyseur de la figure 10.

La figure 12, enfin, représente partiellement une variante de l'interféromètre de la figure 1 permettant de mesurer une variation de pression.

Selon l'invention et plus spécialement selon celui de ses modes d'application, ainsi que selon ceux des modes de réalisation de ses diverses parties, auxquels il semble qu'il y ait lieu d'accorder la préférence, se proposant, par example, de réaliser un procédé et un dispositif de mesure par l'analyse d'un spectre lumineux cannelé, notamment de mesure d'un déplacement de faible amplitude d'une surface mobile, éventuellement représentatif de la variation d'une grandeur physique convertible en un tel déplacement, on s'y prend comme suit ou d'une manière analogue.

En se référant tout d'abord à la figure 1, on va d'abord expliquer la création d'un spectre cannelé fonction de la position relative de deux surfaces réfléchissantes, l'une fixe, l'autre mobile, d'un interféromètre à deux faisceaux, tel qu'un interféromètre de Fizeau.

La lumière émise par une source de lumière blanche ou plus généralement par une source de lumière ayant une largeur spectrale étendue, telle qu'une lampe à filament de tungstène 1, ou une diode électroluminescente (LED), est transmise par une fibre optique 2, notamment du type multimode, à un interféromètre 3 du type Fizeau qui reçoit le faisceau lumineux incident 4 sortant de la fibre optique 2.

Un tel interféromètre comporte deux surfaces réfléchissantes 5 et 6, la surface 5 étant fixe, tandis que la surface 6 est mobile et c'est le déplacement de cette surface mobile 6 par rapport à la surface fixe 5 qui est à mesurer ; la position de la surface 6 peut dépendre d'une grandeur physique (telle que pression, température, champ magnétique, champ électrique) dont les variations sont convertibles en variations de position et donc en déplacements de la surface mobile 6.

Sur la figure 2 on a illustré un spectre cannelé obtenu à la sortie de l'interféromètre de Fizeau 3, l'intensité I étant portée en ordonnées et la longueur d'onde $\lambda$ (en nanomètres) en abscisses, l'intervalle de longueur d'onde $\Delta\lambda$ étant de l'ordre de 40 à 50 nm.

Si l'on appelle d la distance (variable) entre les surfaces 5 et 6 et $\theta$ l'angle d'incidence considéré, la différence de marche pour les rayons 4 réfléchis sur la surface 6 (rayons réfléchis 4a) et réfléchis sur la surface 5 (rayons réfléchis 4b), désignée e, est donnée par la formule e=nd/cos $\theta$, dans laquelle n représente l'indice de réfraction de l'air. Les deux faisceaux émergeants 4a, 4b ont suivi des trajets optiques de longueurs différentes, la différence de trajets optiques étant égale à 2e, ce qu'on peut traduire, en terme de phase, par la formule $\Delta\varphi = 4\pi e/\lambda$ dans laquelle $\lambda$ désigne la longueur d'onde et $\Delta\varphi$ la variation de phase entre les faisceaux 4a et 4b.

On voit donc que la lumière blanche subit une modulation sinusoïdale de l'intensité I en fonction de la longueur d'onde $\lambda$, qui peut s'écrire $I(\lambda) = I_0(A+\cos 4\pi e/\lambda)$, formule dans laquelle $I_0$ représente l'intensité moyenne et A représente le contraste de l'interféromètre. A est supérieur ou égal à 1. Dans la pratique, et c'est ce qu'on fera ci-après, on peut prendre A = 1.

Si la largeur spectrale est petite devant la longueur d'onde centrale $\lambda_0$, on peut linéariser au premier ordre et écrire $I(\lambda)=I_0[\cos 4\pi e/\lambda_0(2-\lambda/\lambda_0)+1]$, c'est-à-dire $I(\lambda)=I_0[\cos(\varphi-2\pi\lambda/\Lambda)+1]$, formule dans laquelle $\Lambda=\lambda_0^2/2e$ est la période de modulation du spectre de la lumière issue de l'interféromètre et $\varphi=8\pi e/\lambda 0$ est indépendant de $\lambda$.

On voit donc que l'analyse de la modulation du spectre cannelé de la lumière issue de l'interféromètre 3 permet de déduire, à partir de la phase $\varphi$ de ce spectre cannelé, la longueur optique e de l'interféromètre 3 et par conséquent la distance d entre la surface mobile 6 et la surface fixe 5 de l'interféromètre, donc le déplacement de cette surface mobile 6.

Bien entendu on s'arrange pour que le déplacement maximal de la surface mobile soit faible par rapport à l'écart nominal $d_0$ entre les deux surfaces fixe et mobile (par exemple ce déplacement maximal est de l'ordre de $d_0/10$).

On peut constater qu'une faible variation de d et par conséquent de e se traduit par une modification proportionnelle de la phase $\varphi$ de la sinusoïde, ainsi que de la période de modulation $\Lambda$ du spectre.

Si la variation de d et donc de e est faible, d'une part, et l'intervalle spectral utile est étroit, d'autre part, on peut négliger la variation de $\Lambda$ et ne prendre en considération que la variation de $\varphi$.

A cet effet, conformément à l'invention, on dispose, à la sortie d'une fibre optique 7, de préférence du type multimode, qui transmet les faisceaux 4a et 4b sortant de l'interféromètre de Fizeau 3, un analyseur 8 qui comporte un élément dispersif, tel qu'un prisme ou un réseau, un filtre et des photodétecteurs.

Sur la figure 1 on a illustré un réseau dispersif 9 que l'on retrouve sur la figure 3 sur laquelle on a également représenté le double faisceau 10 qui sort de la fibre optique 7 et qui est incident par rapport au réseau 9.

Dans le réseau 9, à chaque longueur d'onde du double faisceau incident 10 correspond une direction de déflexion 11, comme illustré par l'angle $\theta$ $(\lambda)$, c'est-à-dire, à une distance d' du réseau 9, une coordonnée $x(\lambda)$ proportionnelle à $\lambda$ sur un axe ox perpendiculaire à l'axe optique du réseau 9 : $x(\lambda) = k\lambda$ avec k représentant une constante.

On voit donc que la modulation spectrale de l'intensité produite par l'interféromètre 3 se traduit à la sortie du réseau 9 par une modulation spatiale (étalement spatial) de la forme $I(x)=I_0 [\cos(\varphi+2\pi x/k\Lambda)+1]$.

L'analyseur 8 comprend des moyens pour filtrer cette distribution spatiale, en particulier un filtre 12 dont le coefficient de transmission T varie périodiquement entre 0 et 1, avec une période fixe qui est la même que la période de la modulation spatiale précitée.

Sur la figure 4 on a représenté à la partie supérieure la variation de l'intensité lumineuse I, en fonction de la distance x, de la modulation spatiale pour deux phases différentes, à savoir une phase $\varphi_1$ (courbe en trait plein) et une phase $\varphi_2$ (courbe en traits interrompus). En dessous on a illustré, également en fonction de x, la variation du coefficient de transmission T du filtre 12 entre 0 et 1. Enfin à la partie inférieure on a illustré la variation de l'intensité I' transmise par le filtre 12, également en fonction de x, et on voit que cette intensité I' est fonction de la phase $\varphi$ : on a illustré en trait plein l'intensité transmise correspondant au déphasage $\varphi_1$ et en traits interrompus l'intensité transmise pour le déphasage $\varphi_2$ de la modulation spatiale produite par le réseau 9.

L'ensemble lentille 13-photodétecteur 14 de la figure 1 permet de mesurer l'intensité totale transmise par le filtre 12, intensité totale (disponible en 15) qui est fonction de la phase $\varphi$ de la modulation spatiale produite par le réseau 9 et donc de la modulation spectrale produite par l'interféromètre 3 et en définitive de la distance d que l'on veut mesurer.

La détermination, au moyen de la lentille 13 et du photodétecteur 14, de la seule intensité transmise présente l'inconvénient que le signal de sortie du photodétecteur 14 est sensible non seulement aux variations de la phase $\varphi$ mais aussi à celles de l'intensité moyenne $I_0$ de la lumière.

C'est pour cela que l'on prévoit avantageusement que le filtre 12 comprend en fait deux filtres complémentaires constitués par une succession de zones complètement réfléchissantes 12r et de zones complètement transparentes 12t, l'un des filtres étant un filtre en transmission et l'autre un filtre en réflexion, et on prévoit une seconde lentille 13' et un second photodétecteur 14' qui reçoivent la lumière totale réfléchie par le filtre, qui est également fonction de la phase $\varphi$ et de l'intensité moyenne $I_0$ et qui est disponible en 15'.

La somme des intensités reçues par les deux détecteurs 14 et 14' est fonction directe de $I_0$ et il suffit donc de faire le rapport entre la sortie 15 ou 15' d'un des deux photodétecteurs 14 ou 14' et la somme des sorties des deux photodétecteurs pour avoir un signal indépendant de $I_0$ (qui apparaît au numérateur et dénominateur de ce rapport), signal qui est donc uniquement fonction de $\varphi$, donc de e, et en définitive de d que l'on veut mesurer. Une unité électronique 20, très simple effectue un tel rapport, sa sortie 21 étant fonction seulement de $\varphi$, donc de d.

On notera qu'avec le dispositif de la figure 1 à deux filtres complémentaires on peut mesurer la phase $\varphi$ pour des variations comprises entre 0 et $\pi$ seulement.

On peut perfectionner le filtre 12 pour pouvoir mesurer la phase $\varphi$ pour des variations comprises entre 0 et $2\pi$, en prévoyant, dans les zones à coefficient de transmission différent de 1, une succession de zones absorbantes et de zones réfléchissantes. Les résultats obtenus avec un tel filtre modifié découlent des courbes de la figure 5.

A la partie supérieure de cette figure 5 on retrouve la sinusoïde illustrant les variations de l'intensité I en fonction de la distance x, à l'entrée du filtre 12 modifié. Les trois lignes suivantes représentent les coefficients de transmission T, de réflexion R et d'absorption Ab, respectivement, des bandes successives du filtre 12 modifié.

Il en résulte que le signal de sortie du photodétecteur 14 que mesure l'intensité transmise est en quadrature avec le signal de sortie du photodétecteur 14' qui représente le signal réfléchi par le filtre. Ce déphasage en quadrature entre les deux signaux permet de lever totalement l'indétermination sur $2\pi$ radiants (360°) et donc de connaître le sens de variation de $\varphi$.

Dans une première variante on peut utiliser, à la place d'un filtre 12 dont la période spatiale est exactement celle de la période de modulation spatiale du double faisceau 11 arrivant sur le filtre, un filtre 12a (figure 8) ayant une période spatiale légèrement différente de la période spatiale du faisceau incident 11. Dans ce cas la lumière transmise par le filtre contient un terme périodique en fonction de la distance x, terme dont la fréquence (fréquence de battement) est égale à la différence des fréquences du filtre 12a et du faisceau incident 11.

Comme on peut le voir sur la figure 6, pour un faisceau incident 11 du type illustré en haut de cette figure et un coefficient de transmission T variant entre 0 et 1 du filtre 12a, comme représenté à la deuxième ligne de cette figure, on obtient une intensité transmise I' illustrée sur la troisième ligne de cette figure et une intensité transmise moyenne I'm illustrée à la dernière ligne de cette figure 6.

En supposant que la fréquence de modulation du double faisceau 11, d'une part, et du filtre 12a, d'autre part, sont respectivement A et A' et que le filtre possède un coefficient de transmission T qui est une fonction sinusoïdale de x donnée par la formule

$$T(x) = [\cos(2\pi A'x)+1]/2,$$

l'intensité transmise aura la valeur
$$I = I_0/2[1+\cos(\varphi+2\pi Ax)] \, [1+(\cos 2\pi A'x)],$$

formule qui peut être décomposée comme suit
$$I = I_0/2[1+\tfrac{1}{2}\cos(\varphi+2\pi(A-A')x)+\tfrac{1}{2}\cos(\varphi+2\pi(A+A')x) + \cos(\varphi+2\pi Ax)+\cos(2\pi A'x)].$$

Etant donné que les trois derniers termes de cette formule ont une moyenne nulle à l'échelle de la période (1/A), l'intensité est donc proportionnelle à

$$1+\tfrac{1}{2}\cos(\varphi+2\pi \, Bx) \quad (1),$$

en appelant B la différence A–A', qui est la fréquence de battement.

Si on choisit L, longueur totale d'analyse sur x, et la fréquence A' du filtre, et donc la fréquence de battement B, pour que l'on ait L = 1/B, la moyenne locale de l'intensité transmise parcourt exactement une période de la fréquence de battement B, comme cela est illustré par les courbes de la figure 7 correspondant à trois fréquences $\varphi_0$, $\varphi_1$ et $\varphi_2$.

La formule (1) montre qu'en mesurant l'intensité totale transmise dans chacune des moitiés du champ, à savoir dans les zones $Z_1$ et $Z_2$ de la figure 7, on obtient des signaux proportionnels à 1 + cos$\varphi$ pour le champ $Z_1$ et à 1 – cos$\varphi$ pour le champ $Z_2$. On en déduit aisément $\varphi$ dans la zone de 0 à $\pi$.

Par contre si l'on choisit L = 1/2B on obtient sin$\varphi$ et cos$\varphi$, ce qui permet de déterminer $\varphi$ sur l'intervalle 0 à $2\pi$ sans indétermination et même en-deça et au-delà en effectuant un comptage de franges. Toutefois dans ce cas il est nécessaire d'éliminer $I_0$ pour avoir une détermination absolue et il faut donc prévoir le calcul de $\cos^2\varphi + \sin^2\varphi$ pour normaliser.

Sur la figure 8 on a illustré la variante de l'analyseur 8 comportant, en plus du réseau 9, un filtre 12a du type précité et deux lentilles 13a et 13b coopérant avec des photodétecteurs 14a et 14b respectivement dont les sorties en 15a et 15b sont proportionnelles à :

$$1 + \cos\varphi \text{ et } 1 - \cos\varphi \text{ lorsque } L = 1/B$$

$$\sin\varphi \text{ et } \cos\varphi \text{ lorsque } L = 1/2B.$$

Sur la figure 9 on a illustré une seconde variante dans laquelle le filtre est un filtre Moiré 12b avec plusieurs trames, par exemple quatre trames aux fréquences f, 2f, 3f et 4f, derrière lesquelles se trouve une barrette 16 de photodiodes 16a, 16b, 16c...

En avant du filtre Moiré à plusieurs trames on a illustré la lumière incidente 11 de fréquence spatiale f.

Une troisième variante est illustrée sur la figure 10, cette variante comportant un filtre 12c, dont la période varie linéairement suivant une direction y perpendiculaire à x, ce filtre 12c étant suivi d'une lentille cylindrique 13c qui concentre les rayons lumineux sortant du filtre 12c sur une barrette 17 de photodiodes 17a, 17b, 17c...orientées suivant la direction y. Une telle disposition, illustrée sur la figure 10, permet de mesurer la valeur de e, donc de d, lorsque la période $\Lambda$ varie fortement dans la bande de variation de e.

Avec un tel filtre l'intensité suivant la direction y est donnée par la formule :

$$I = I_1[1+\sin(k'(Y+Y_m)/(Y+Y_m)]$$

dans laquelle k' est un paramètre qui est proportionnel à la largeur spectrale de la source et $Y_m$ est la valeur de l'abscisse Y pour laquelle la fréquence du filtre est égale à la fréquence de modulation de la source.

Cette dernière formule est illustrée par la courbe de la figure 11 sur laquelle Y est porté en abscisses et l'intensité I en ordonnées et sur laquelle on a indiqué la valeur $Y_m$. La détection du maximum d'intensité $I_M$ permet de connaître l'abscisse $Y_m$ et donc la période de modulation spectrale de la source, ce qui permet de déduire la valeur de e, donc d.

On voit donc que l'invention permet de mesurer d, distance entre une surface fixe 5 et la surface mobile 6 dont on veut repérer le déplacement, sans recourir à des méthodes compliquées de calcul numérique pour l'analyse du spectre cannelé (celui de la figure 2) résultant de la dispersion spectrale du faisceau lumineux ayant traversé l'interféromètre 3.

Selon l'invention, il suffit de mettre en oeuvre un réseau dispersif, un filtre (et on a illustré différents types de filtres), éventuellement une ou deux lentilles (dans le cas de certains filtres) et des photodétecteurs ou une barrette de photodiodes.

La position de la surface mobile 6 dont on mesure les déplacements, qui sont fonction de d, peut représenter une grandeur physique (pression, température, champ électrique, champ magnétique, etc.).

En particulier sur la figure 12 on a illustré comment on peut convertir une pression P en un déplacement dans un interféromètre de Fizeau modifié 3a : une lame de verre 5a constitue la surface fixe et une membrane déformable 6a qui subit la pression P constitue la surface mobile de l'interféromètre 3.

La pression à mesurer P appliquée sur le côté droit de la membrane 6a, déforme celle-ci en faisant varier la distance d entre sa face arrière réfléchissante et la lame de verre 5a également réfléchissante. On choisit la raideur de la membrane déformable pour que celle-ci subisse son déplacement maximal pour la valeur maximale de la gamme de pressions que l'on veut mesurer, l'espacement nominal entre la membrane au repos et la lame de verre étant choisi pour qu'il soit important devant l'excursion maximale de la membrane.

Sur la figure 12 on retrouve la fibre de verre 2 et le faisceau lumineux incident 4.

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Procédé de mesure par analyse d'un spectre lumineux cannelé, notamment de mesure d'un déplacement de faible amplitude d'une surface mobile, éventuellement représentative de la variation d'une grandeur physique convertible en un tel déplacement, consistant à engendrer un spectre cannelé dont la fréquence de modulation spectrale est fonction du déplacement d'une surface mobile par rapport à une position de référence de celle-ci et à analyser ledit spectre cannelé, caractérisé en ce que l'analyse du spectre cannelé est réalisée en étalant spatialement le spectre cannelé modulé en fréquence, en filtrant le spectre étalé spatialement avec un coefficient de filtrage qui varie périodiquement avec une période fixe, qui est égale ou sensiblement égale, éventuellement à un facteur constant près, à la période spatiale du spectre étalé spatialement, pour une position de référence de ladite surface mobile, et en déduisant de ce spectre filtré la phase de modulation du spectre cannelé.

2. Procédé selon la revendication 1, caractérisé en ce que l'analyse du spectre cannelé est réalisée en déduisant en outre du spectre filtré l'intensité moyenne du spectre cannelé.

3. Dispositif de mesure mettant en oeuvre le procédé selon la revendication 1 ou 2, qui comporte un interféromètre à deux faisceaux (3, 3a) avec deux surfaces réfléchissantes, dont une surface (5, 5a) est fixe et l'autre (6, 6a) est mobile, l'intervalle (d) variable entre ces deux surfaces déterminant la différence de marche (e) des rayons lumineux dans l'interféromètre, une source de lumière (1) éclairant ledit interféromètre et un analyseur (8) du spectre cannelé engendré par ladite source de lumière dans ledit interféromètre, caractérisé en ce que l'analyseur (8) est constitué par des moyens (9) d'étalement spatial du spectre cannelé modulé en fréquence, par un filtre (12, 12a, 12b, 12c) dont le coefficient de transmission (T) et/ou de réflexion (R) est périodique, au moins suivant une direction, de période fixe, égale ou sensiblement égale, éventuellement à un facteur près, à la période de la distribution spatiale du spectre étalé spatialement, et au moins un photodétecteur (14, 14' ; 14a, 14b ; 16 ; 17) recevant la lumière transmise et/ou réfléchie par ledit réseau pour déterminer la phase de modulation ($\varphi$) du spectre cannelé et donc ladite différence de marche (e) qui est fonction du déplacement de ladite surface mobile (6, 6a).

4. Dispositif selon la revendication 3, caractérisé en ce qu'il comporte au moins deux photodétecteurs (14, 14') et des moyens (20) pour déduire de la sortie (15, 15') de ceux-ci la phase de modulation ($\varphi$) et l'intensité moyenne ($I_0$) du spectre cannelé.

5. Dispositif selon la revendication 3 ou 4, caractérisé en ce que l'interféromètre (3) est un interféromètre de Fizeau.

6. Dispositif selon la revendication 3, 4 ou 5, caractérisé en ce que les moyens (9) d'étalement spatial sont constitués par un réseau de diffraction.

7. Dispositif selon l'une quelconque des revendications 3 à 6, caractérisé en ce que la source de lumière (1) est une source de lumière blanche, telle qu'une lampe à filament de tungstène.

8. Dispositif selon l'une quelconque des revendications 3 à 6, caractérisé en ce que la source de lumière (1) est une diode électroluminescente (LED).

9. Dispositif selon l'une quelconque des revendications 3 à 8, caractérisé en ce qu'on prévoit des fibres optiques (2, 7), en particulier des fibres optiques multimodes, entre la source de lumière (1) et l'entrée de l'interféromètre (3, 3a), d'une part, et la sortie de l'interféromètre et l'analyseur (8), d'autre part.

## Ansprüche

1. Meßverfahren zur Analyse eines kannelierten Lichtspektrums, insbesondere zur Messung von kleinen Versetzungen einer beweglichen Oberfläche, die eventuell repräsentativ zur Reaktion einer physikalischen Größe ist, die in eine solche Versetzung umwandelbar ist, und die in einer Verbreiterung des kannelierten Lichtspektrums besteht, dessen spektrale Modulationsfrequenz eine Funktion der Verschiebung der beweglichen Oberfläche ist, in bezug auf eine Referenzposition derselben und zur Analyse des kannelierten Lichtspektrums, dadurch gekennzeichnet, daß die Analyse des kannelierten Lichtspektrums verwirklicht wird durch die räumliche Verbreiterung des kannelierten frequenzmodulierten Lichtspektrums und durch die räumliche Filterung des verbreiterten Spektrums mit einem Filterungskoeffizienten, der periodisch mit einer festen Periodizität variiert und der eventuell bis auf einen fast konstanten Faktor zur räumlichen Periode des räumlich verbreiterten Spektrums zu einer Referenzposition der mobilen Oberfläche gleich oder fast gleich ist, und durch die Bestimmung der Modulationsphase des kannelierten Spektrums aus diesem gefilterten Spektrum.

2. Verfahren nach Anspruch 1, dadurch gekennzeichnet, daß die Analyse des kannelierten Lichtspektrums überdies durch die Bestimmung der mittleren Intensität des kannelierten Lichtspektrums aus dem filtrierten Spektrum verwirklicht wird.

3. Meßvorrichtung zur Durchführung des Verfahrens nach Anspruch 1 oder 2, die aus einem Interferometer mit zwei Bündeln (3, 3a) mit zwei reflektierenden Oberflächen besteht, dessen eine Oberfläche (5, 5a) fest ist und dessen andere Oberfläche (6, 6a) mobil ist, wobei das Intervall (d) zwischen diesen beiden Oberflächen variabel ist und welches die Differenz des Weges (e) der Lichtstrahlen im Interferometer bestimmt, und daß eine Lichtquelle (1) das Interferometer und einen Analysator (8) des durch die Lichtquelle im Interferometer verbreiterten und kannelierten Lichtspektrums beleuchtet, dadurch gekennzeichnet, daß der Analysator (8) Mittel (9) zur Verbreiterung des frequenzmodulierten, kannelierten Lichtspektrums aufweist und einen Filter (12, 12a, 12b, 12c), dessen Transmissions-(T) und-/oder Reflektionskoeffizient (R) periodisch wenigstens in einer Richtung von fester Periodizität eventuell bis auf einen Faktor zur räumlichen Verteilung des räumlich ausgedehnten Spektrums gleich oder fast gleich ist, und wenigstens einen Photodetektor (14, 14', 14a, 14b, 16, 17), der das durch das Gitter transmittierte und/oder reflektierte zur Bestimmung der Modulationsphase ($\varphi$) des kannelierten Lichtspektrums und somit der Wegdifferenz (e) aufnimmt, die eine Funktion der Verschiebung der Oberfläche (6, 6a) ist.

4. Vorrichtung nach Anspruch 3, dadurch gekennzeichnet, daß er wenigstens zwei Photodetektoren (14, 14') und Mittel (20) zur Bestimmung der Modulationsphase ($\varphi$) und der mittleren Intensität ($I_0$) des kannelierten Lichtspektrums aufweist aus dem Ausgang desselben.

5. Vorrichtung nach Anspruch 3 oder 4, dadurch gekennzeichnet, daß das Interferometer (3) ein Fizeau-Interferometer ist.

6. Vorrichtung nach Anspruch 3, 4 oder 5, dadurch gekennzeichnet, daß die Mittel (9) zur räumlichen Verbreiterung aus einem Beugungsgitter bestehen.

7. Vorrichtung nach einem der vorangehenden Ansprüche, dadurch gekennzeichnet, daß die Lichtquelle (1) eine Quelle weißen Lichtes ist, z.B. eine Lampe mit einem Wolfram-Fildament.

8. Vorrichtung nach einem der vorangehenden Ansprüche 3 bis 6, dadurch gekennzeichnet, daß die Lichtquelle (1) eine Elektrolumineszenz-Diode (ELD) ist.

9. Vorrichtung nach einem der vorangehenden Ansprüche 3 bis 8, dadurch gekennzeichnet, daß man optische Fasern (2, 7), insbesondere multimode optische Fasern, zwischen der Lichtquelle (1) und dem Eintritt in das Interferometer (3, 3a) zum einen und am Ausgang des Interferometers und des Analysators (8) zum anderen vorsieht.

## Claims

1. Channelled light spectrum analysis measurement method, particularly for measuring a small amplitude movement of a mobile surface possibly representative of the variation of a physical magnitude convertible into such a movement, consisting in generating a channelled spectrum, the spectral modulation frequency of which is a function of the movement of a mobile surface with respect to a reference position thereof, and in analyzing said channelled spectrum, characterized by consisting in analyzing said channelled spectrum by spatially spreading the frequency-modulated channelled spectrum, in filtering the spatially-spread spectrum with a filtering coefficient which varies periodically with a fixed period substantially equal or substantially proportional to the spatial period of the spatially-spread spectrum, for a reference position of said mobile surface, and in deriving from the filtered spectrum the modulation phase of said channelled spectrum.

2. The improved method according to claim 1, characterized by said channelled spectrum being analyzed by further deriving the mean intensity of said channelled spectrum from said filtered spectrum.

3. Device for performing the method of claim 1 or 2, said device comprising a two-beam interferometer (3, 3a) with two reflecting surfaces, one of said surfaces being stationary and the other one being mobile, the variable interval (d) between said two surfaces defining the difference in the rate of progress (e) of the light rays in said interferometer, a light source (1) illuminating said interferometer, and an analyzer (8) for analyzing the channelled spectrum generated by said light source in said interferometer, characterized by said analyzer being provided with array means (9) for spatially spreading the frequency-modulated channelled spectrum, with a filter (12, 12a, 12b, 12c), the transmission (T) and/or the reflection (R) coefficient of which is, at least in one direction, periodic, with a constant period substantially equal or substantially proportional with a given ratio of proportion to the period of the spatial distribution of the spatially-spread spectrum, and with at least one photodetector (14, 14' ; 14a, 14b ; 16 ; 17) receiving the outgoing light transmitted from or reflected by said array for determining the modulation phase ($\varphi$) of said channelled spectrum and therefrom said difference in rate of progress (e) which is a function of the movement of said mobile surface (6, 6a).

4. The device according to claim 3, characterized by being provided with at least two photodetectors (14, 14') and means (20) for deriving, from the outputs thereof, the modulation phase ($\varphi$) and the mean intensity (Io) of said channelled spectrum.

5. The device according to claim 3 or 4, characterized by said interferometer being constituted by a Fizeau interferometer.

6. The device according to claim 3 or 4 or 5, characterized by said spatially spreading means being constituted by a diffraction network.

7. The device according to anyone of claims 3 to 6, characterized by said light source being constituted by a white light source, such a as tungsten filament lamp.

8. The device according to anyone of claims 3 to 6, characterized by said light source being constituted by a light-emetting diode (LED).

9. The device according to anyone of claims 3 to 8, characterized by optical fibers (2, 7) particularly multimode fibers being provided between said light source (1) and the input of said interferometer (3, 3a) and between the output of said interferometer and said analyzer (8).

# FIG.1.

# FIG.2.

$$\Delta\lambda = 40 \text{ à } 50 \text{ nm}$$

FIG.3.

FIG.4.

FIG.5.

# FIG.6.

# FIG.7.

# FIG.8.

FIG.9.

FIG.10.

FIG.11.

FIG.12.